# EUROPEAN PATENT SPECIFICATION

(11) **EP 1 796 354 B1**
(45) Date of publication and mention of the grant of the patent: **28.07.2010**
(21) Application number: 06016943.0
(22) Date of filing: 14.08.2006
(51) Int. Cl.: H04M 1/725

(54) **Method and mobile terminal for log management during Bluetooth communication**
Verfahren und mobiles Endgerät für Logverwaltung während einer Bluetooth-Kommunikationsverbindung
Méthode et terminal mobile pour la gestion de logs pendant une communication Bluetooth

(30) Priority: 12.12.2005 KR 20050121755
(43) Date of publication of application: 13.06.2007
(73) Proprietor: Samsung Electronics Co., Ltd., Yeongtong-gu Suwon-si, Gyeonggi-do (KR)
(72) Inventor: Son, In-Gu, Yeongtong-gu Suwon-si Gyeonggi-do (KR); Kang, Chang-Taek, Yeongtong-gu Suwon-si Gyeonggi-do (KR); Cha, Ji-Young, Yeongtong-gu Suwon-si Gyeonggi-do (KR)
(74) Representative: Lang, Johannes

(56) References cited:
- EP-A- 1 569 411
- WO-A-2004/062115
- US-A1- 2005 075 097
- US-A1- 2005 232 247

## Description

### BACKGROUND OF THE INVENTION

### Field of the Invention

The present invention relates to Bluetooth communication. More particularly, the present invention relates to a mobile terminal device and method for managing a log during Bluetooth communication.

### Description of the Related Art

Bluetooth is a standard for wireless connection between portable devices, such as a portable PC and a mobile phone, for short-range radio communication at a low cost. Bluetooth-enabled digital devices can communicate and exchange voice and data between each another using a radio frequency of license-free ISM (Industrial, Scientific and Medical) at 2.45 GHz. For example, Bluetooth technology implemented in a mobile phone and a laptop computer can connect the two devices wirelessly, eliminating the need for any physical cable connection. Actually, all digital devices like PDAs, desktops, facsimile machines, keyboards, and joysticks can be part of a Bluetooth system.

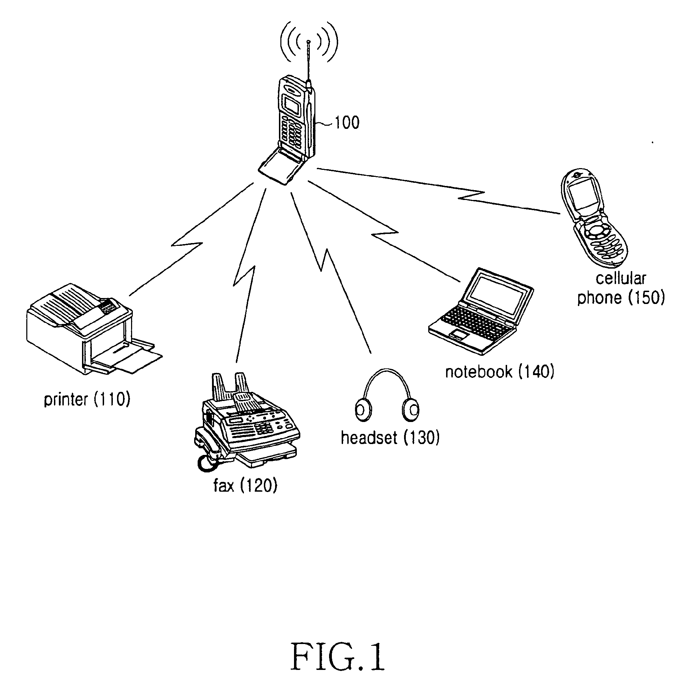

FIG. 1 is a view illustrating devices connected for typical Bluetooth communication.

Referring to FIG. 1, a user terminal 100 with a built-in Bluetooth module establishes a wireless connection with peripheral Bluetooth devices 110, 120, 130, 140 and 150.

After inquiring about other Bluetooth devices, the user terminal 100 displays information on the Bluetooth devices 110, 120, 130, 140 and 150 detected in the range.

The user terminal 100 can request a connection to one or more of the detected Bluetooth devices. When a connection is established, the user terminal 100 that has requested the connection acts as a master and the other connected devices 110, 120, 130, 140 and 150 act as slave units. Of course, the user terminal 100 will become a slave if any of the Bluetooth devices 110, 120, 130, 140 and 150 requests a connection to the user terminal 100.

Patent EP 1569411 A1 discloses a computer system, method, and computer program product for controlling data communication in an ad-hoc network, e.g. PICONET, that connects a wireless device and a nearby wireless device. In particular, the patent discloses a system and method for launching and controlling secure and non-secure application programs in wireless devices in a mobile ad-hoc communications network. The method stores an application directory, determines a priority for each entry in the application directory, identifies a selected entry based on the priority, and examines the attributes and security parameters associated with the selected entry.

Application US 2005 075097 discloses a method for operating a mobile terminal having a memory storing application software and data that is descriptive of the use of the mobile terminal, and that further has a display and a controller coupled to the memory. The method includes selecting at least a portion of the data and constructing a blog that is indicative of the use of the mobile station over a period of time, as indicated by the selected portion of the data. The blog may include an animation that is indicative of the use of the mobile station over the period of time, and may also include textual data that is automatically generated in accordance with the use of the mobile station over the period of time.

For the duration of the connection, the master can freely search for various files in the slave units. Also, the master can copy, delete or edit specific files in the slave units.

However, the slave units do not know what has been done to their files by the master. The master's arbitrary change or deletion of an important file in a slave unit may cause a serious problem.

Accordingly, there is a need for an improved method for controlling log management during Bluetooth communication and a mobile terminal employing the same.

### SUMMARY OF THE INVENTION

The present invention has been made to address the above-mentioned problems occurring in the prior art, and exemplary objects of the present invention are to provide a mobile terminal and method for managing a log which enables a user to know what tasks were performed on a file of its terminal by a counterpart terminal connected for Bluetooth communication.

In order to accomplish at least the above object of the present invention, exemplary embodiments of the present invention provide a mobile terminal and method for managing a log during Bluetooth communication in which information about a counterpart terminal connected via Bluetooth is analyzed, the analyzed information about the counterpart terminal is stored, a task performed by the counterpart terminal is analyzed, the analyzed task is stored, and the stored information about the counterpart terminal and the task are displayed.

### BRIEF DESCRIPTION OF THE DRAWINGS

The above and other exemplary objects, features and advantages of the embodiments of the present invention will be more apparent from the following detailed description taken in conjunction with the accompanying drawings, in which:
FIG. 1 is a view illustrating devices connected for typical Bluetooth communication;
FIG. 2 is a block diagram of a mobile terminal according to an exemplary embodiment of the present invention;
FIG. 3 is a flow chart showing a process for establishing a Bluetooth connection between a mobile terminal and another Bluetooth terminal according to an exemplary embodiment of the present invention;
FIG. 4 is a flow chart showing a process of log management during Bluetooth communication on a mobile terminal according to an exemplary embodiment of the present invention; and
FIGs. 5A to 5C are views for explaining the process of FIG. 4.

### DETAILED DESCRIPTION OF THE EXEMPLARY EMBODIMENTS

Hereinafter, exemplary embodiments of the present invention will be described with reference to the accompanying drawings. In the drawings, the same element, although depicted in different drawings, will be designated by the same reference numeral or character. Also, in the following description of the exemplary embodiments of the present invention, a detailed description of known functions and configurations incorporated herein will be omitted for clarity and conciseness.

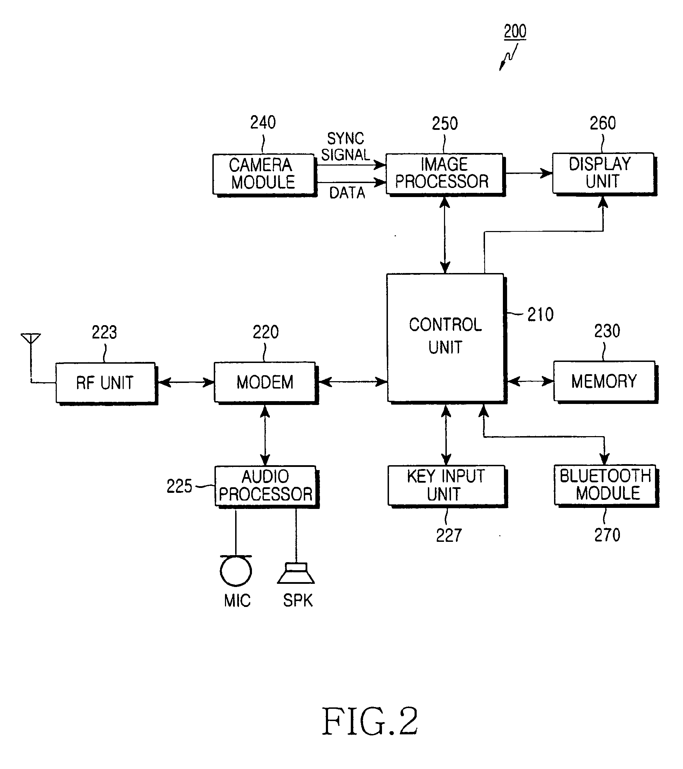

FIG. 2 is a block diagram of a mobile terminal according to an exemplary embodiment of the present invention.

The mobile terminal 200 includes a control unit 210 (for example, an MSM), an RF unit 223, a modem 220, an audio processor 225, a key input unit 227, a memory 230, a camera module 240, an image processor 250, a display unit 260 and a Bluetooth module 270.

The RF unit 223 transmits and receives voice, text, image or control data under the control of the control unit 210. The RF unit 223 comprises an RF transmitter for performing upward conversion and amplification of the frequency of a transmitted signal and an RF receiver for amplifying a received signal with low noise and performing downward conversion of the frequency of the signal.

The modem 220 comprises a transmitter for coding and modulating a signal which will be transmitted and a receiver for demodulating and decoding a received signal.

The audio processor 225 modulates an electric signal input from a microphone into audio data. Also, the audio processor 225 demodulates encoded audio data input from the RF unit 223 into an electric signal and outputs the electric signal through a speaker. The audio processor 225 may include a codec for converting a digital audio signal received by the RF unit 223 into an analog signal and reproducing the analog signal and for converting an analog audio signal generated from the microphone into a digital audio signal. The codec consists of a data codec for processing packet data and an audio codec for processing an audio signal such as a speech signal. The codec can be provided as an independent element or included in the control unit 210.

The key input unit 227 having a key matrix structure (not shown) is provided with alphanumeric keys, function keys and an external volume key. The key input unit 227 outputs a signal corresponding to the user's key input to the control unit 210.

The memory 230 may comprise a program memory and a data memory. According to an exemplary embodiment of the present invention, the memory 230 stores programs for controlling general operations of the mobile terminal 100 and those for controlling management and display of log information during Bluetooth communication. The data memory may temporarily store data generated during implementation of the above programs.

The control unit 210 controls overall operations of the mobile terminal. For example, the control unit 210 may control operations for analyzing information about a counterpart terminal connected via Bluetooth and storing the analyzed information about the counterpart terminal.

In other words, the control unit 210 may determine whether the connected counterpart terminal is a device (for example, a computer or a mobile terminal) capable of performing file processing. If the counterpart terminal is capable of file processing, the control unit 210 will store the time of connection and the identifier information of the counterpart terminal in the memory 230. The file processing includes tasks of downloading, adding, deleting and editing a file.

The identifier information is unique information identifying the counterpart terminal and transferred to the mobile terminal 100 during wireless connection between the mobile terminal 100 and the counterpart terminal for Bluetooth communication. The unique information may include at least one of the type, name, serial number and unique ID number of the counterpart terminal.

In addition, the control unit 210 analyzes a task performed by the counterpart terminal and stores the analyzed task in the memory 230.

When a signal is received from the counterpart terminal during the Bluetooth communication or when a user requests, the control unit 210 can display the stored information on the counterpart terminal and the task performed by the counterpart terminal.

The camera module 240 has a lens (not shown) capable of zooming in and out. The camera module 240 takes image data through the lens. The camera module 240 comprises a camera sensor (not shown) for converting a photographed optical signal into an electrical signal and a signal processor (not shown) for converting an analog image signal photographed by the camera sensor into digital data.

The camera sensor may be a CCD (charge coupled device) sensor, and the signal processor may be a DSP (digital signal processor). The camera sensor and the signal processor may be integrated into a single element or separated as independent elements.

The image processor 250 generates picture data for displaying an image signal output from the camera module 240.

The image processor 250 processes image signals output from the camera module 240 in frames. Also, the image processor 250 adjusts the frame image data to conform to the features, such as size and resolution, which are displayable on the display unit 260, and outputs the adjusted frame image data. The image processor 250 comprises an image codec to compress the frame image data displayed on the display unit 260 in a preset manner or restore the compressed frame image data to the original frame image data. The image codec can be a JPEG codec, an MPEG4 codec, a Wavelet codec, or the like.

Supposing that the image processor 250 has an OSD (on screen display) function, it may output OSD data according to the displayed picture size under the control of the control unit 210.

The display unit 260 outputs various display data generated by the mobile terminal. The display unit 260 may comprise an LCD. The LCD may also comprise a touch screen so it may serve as an input device.

The display unit 260 displays information on the devices connected via Bluetooth and tasks performed by the connected devices. Also, the display unit 260 outputs various display data generated by the mobile terminal.

In addition, the display unit 260 displays image data output from the image processor 250 or user data output from the control unit 210.

The Bluetooth module 270 performs wireless communication with a Bluetooth module embedded in a master unit in order to receive a file from the master unit or send a file stored in the mobile terminal 100 to the master unit.

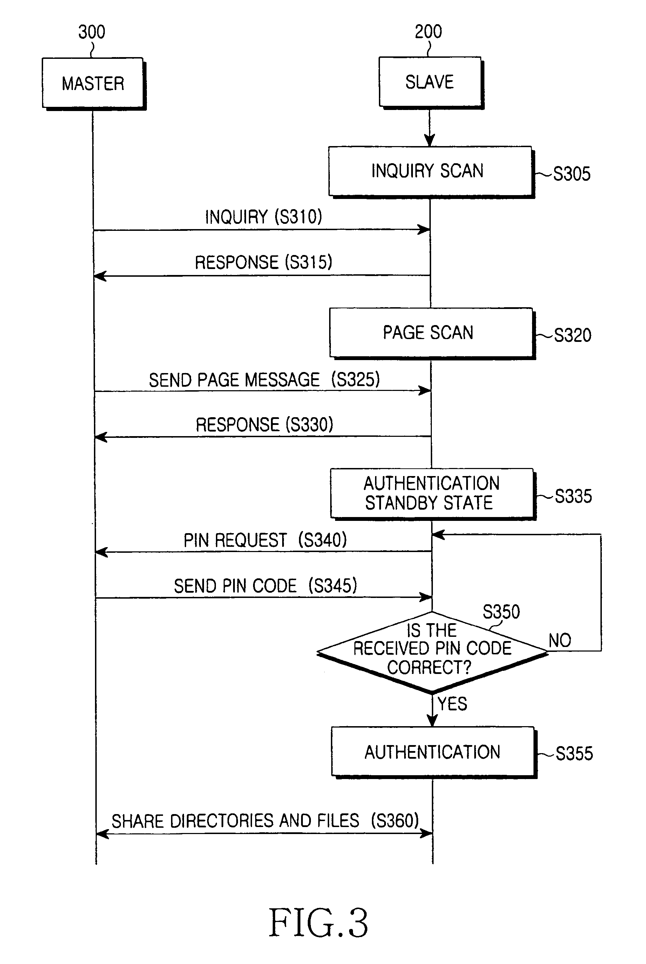

FIG. 3 is a flow chart showing a process for establishing a Bluetooth connection between a mobile terminal and another Bluetooth terminal according to an exemplary embodiment of the present invention. In FIG. 3, a master 300 is a terminal that has requested a Bluetooth connection to a mobile terminal 200. For the duration of the connection, the mobile terminal 200 serves as a slave.

The master 300 outputs an inquiry message to inquire about the slave 200 (S310). At this time, the slave 200 should be in an inquiry scan state (5305). The slave 200 can be a device to which the master 300 wishes to connect to or not.

When the slave 200 receives the inquiry message from the master 300, it responds to the master by sending its Bluetooth Device Address ("BD_ADDR") and clock information (S315).

After sending the information, the slave 200 enters a page scan state to set up a Bluetooth connection (S320).

The inquiry message is sent to all nearby Bluetooth devices (not shown) in inquiry scan state, as well as to the slave 200. All the Bluetooth devices respond to the master 300 in the same manner.

If a response signal is received from the slave 200, the master 300 will send a page message for synchronization to the slave 200 by reference to the BD_ADDR and clock information included in the response signal (S325).

Upon receiving the page message from the master 300, the slave 200 sends a response message including an ID packet to the master 300 (S330). The ID packet may include various information of the slave 200, such as the type (for example, a headset or a mobile phone), manufacturer and hexa code of the slave 200.

After sending the response message, the slave 200 goes into an authentication standby state (S335) and sends a PIN code requesting message for link establishment to the master 300 (S340).

In response to the PIN code requesting message, the master 300 inputs a PIN code and sends the PIN code to the slave 200 (S345).

When receiving the PIN code from the master 300, the slave 200 confirms whether the received PIN code is correct (S350).

If the received PIN code is not correct, the slave 200 will return to step S340 in order to resend the PIN code requesting message to the master 300.

If the received PIN code is correct, the slave 200 will perform authentication and connection procedures (S355) and then share directories and files with the master 300 (S360).

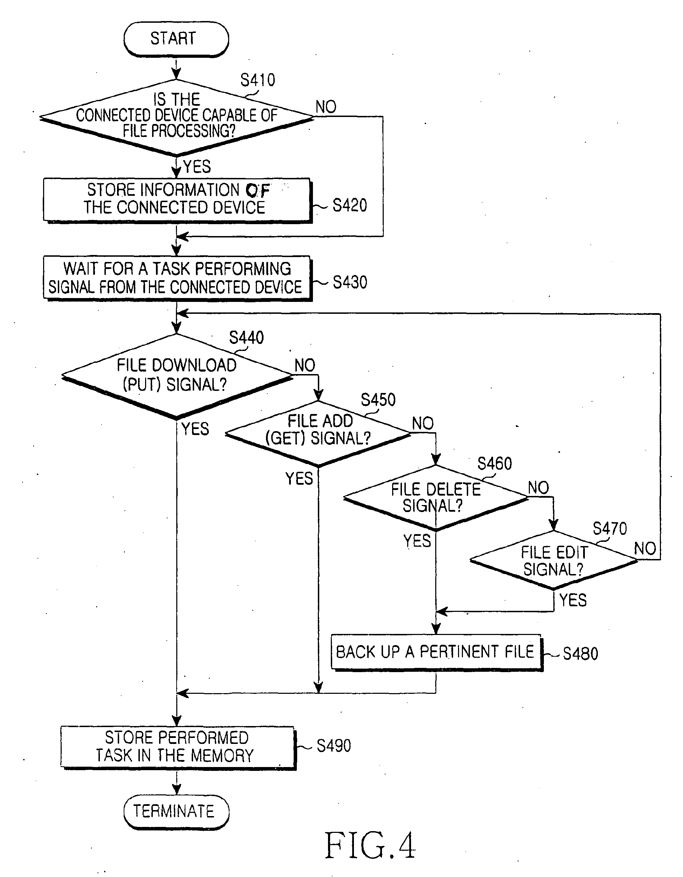

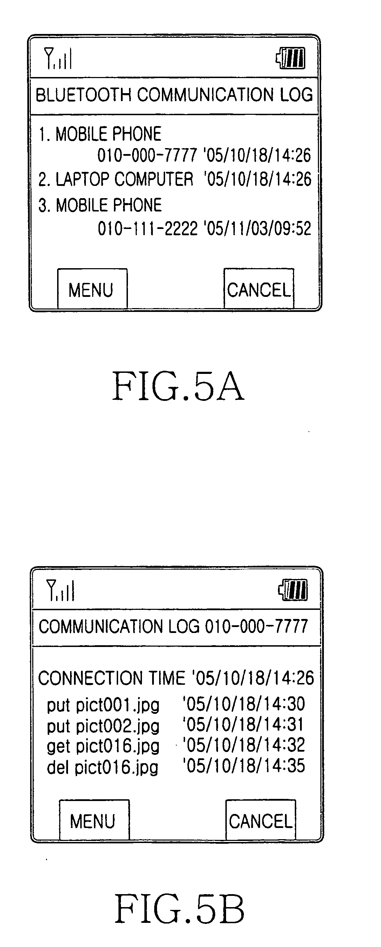

FIG. 4 is a flow chart showing a process of log management during Bluetooth communication on a mobile terminal according to an exemplary embodiment of the present invention. FIGs. 5A to 5C are views for explaining the process of FIG. 4. In an exemplary embodiment of the present invention, the mobile terminal is a slave unit.

Referring to FIGs. 4 and 5A to 5C, the control unit 210 of the mobile terminal determines whether a master connected for Bluetooth communication is a device capable of performing file processing tasks, such as downloading, adding, deleting and editing a file (S410). The control unit 210 makes such a determination from an ID packet included in a page message transmitted to the mobile terminal from the master. A device capable of file processing includes a computer and a mobile phone.

If the master connected to the mobile terminal is a device capable of file processing, the control unit 210 will store information about the master in the memory 230 (S420) and wait for a task performing signal from the master (S430). The information about the master may be a distinguishable device name, product number and telephone number of the master. For example, if the master is a mobile phone, the information about the master may include a manufacturer and a unique ID number. If the master is a computer, the information may include a model and a serial number. The control unit 210 may also store the time of connection together with the information on the master in the memory 230. The information about the master terminal and connection stored in the memory 230 can be displayed in the manner illustrated in FIG. 5A

If the master connected to the mobile terminal is not a device capable of file processing (for example, a Bluetooth headset 130 in FIG. 1), no procedure for log management will be necessary. Therefore, the control unit 210 waits for a task performing signal from the master, without storing the information about the master in the memory 230 (S430).

When a task performing signal is received from the master, the control unit 210 confirms whether the received signal is a file download (put) signal (S440). The task performing signal is sent using a Bluetooth communication protocol. For example, if the signal from the master is Delete Req, the control unit 210 will recognize that the master will perform a task of deleting a file.

If the received signal is a file download (put) signal, the control unit 210 will store information about the task performed by the master in the memory 230 (S490). At this time, the control unit 210 will also store information, such as the time of receipt of the task performing signal and the type of the received task performing signal, in the memory 230. The task information stored in the memory 230 can be displayed in the manner as illustrated in FIG. 5B.

If the task performing signal received from the master is not a file download (put) signal, the control unit 210 will then determine whether the signal is a file addition (get) signal (S450).

If the received signal is a file add (get) signal, the control unit 210 will store information about the task performed by the master in the memory 230 (S490). The task information stored in the memory 230 can be displayed in the manner as illustrated in FIG. 5B.

If the received signal is not a file add (get) signal, the control unit 210 will then determine whether the signal is a file delete signal (S460).

If the received signal is a file delete signal, the control unit 210 will back up the original file (which will be deleted by the master) in the memory 230 (S480). The control unit 210 will also store information about the task performed by the master in the memory 230 (S490).

If the received signal is not a file delete signal, the control unit 210 will then determine whether the signal is a file edit signal (S470).

If the received signal is a file edit signal, the control unit 210 will back up the original file (which will be edited by the master) in the memory 230 (S480) and store information about the task performed by the master (S490).

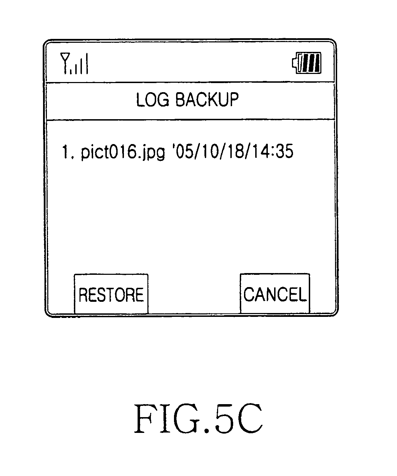

The control unit 210 may display the stored information about the task performed by the master on the display unit 260 after termination of the Bluetooth communication or during the communication, as illustrated in FIG. 5C.

As explained above, the exemplary embodiments of the present invention provide a mobile terminal and method for log management which enable a user to know what tasks were performed on a file of the mobile terminal by a counterpart terminal connected for Bluetooth communication.

Since the mobile terminal can save original files using a backup function of log management, it is possible to prevent a serious problem caused by the counterpart terminal's arbitrary change or deletion of an important file in the slave unit.

Although exemplary embodiments of the present invention have been described for illustrative purposes, those skilled in the art will appreciate that various modifications, additions and substitutions are possible, without departing from the scope of the invention as disclosed in the accompanying claims, including the full scope of equivalents thereof.

## Claims

1. A method for log management during Bluetooth communication, the method for a mobile communication terminal operating in a slave mode comprising the steps of:
analyzing information about a counterpart terminal connected via Bluetooth (S410);
storing the analyzed information about the counterpart terminal (S420);
analyzing a file processing task performed by the counterpart terminal (S440 to S470);
storing the analyzed file processing task (S490); and
displaying the stored information about the counterpart terminal and the file processing task (Fig.5A).

2. The method according to claim 1, wherein said step of storing information about the counterpart terminal comprises:
determining whether the counterpart terminal is a terminal capable of performing at least one file processing task (S410); and
storing a time of connection and identifier information received from the counterpart terminal, if the counterpart terminal is capable of performing at least one file processing task (S420).

3. The method according to claim 2, wherein said identifier information comprises unique information identifying the counterpart terminal and transferred to the mobile communication terminal during the connection for Bluetooth communication.

4. The method according to claim 3, wherein said unique information comprises at least one of a type, name, serial number and unique ID number of the counterpart terminal.

5. The method according to claim 2, wherein said counterpart terminal capable of performing file processing tasks comprises at least one of a computer and a mobile phone.

6. The method according to claim 2, wherein said step of storing the analyzed file processing task (S490) comprises:
determining a file processing task type to be performed by the counterpart terminal from a signal received from the counterpart terminal; and
storing a time of receipt of the signal and the determined file processing task type.

7. The method according to claim 6, further comprising backing up a pertinent file, if the determined file processing task type is a file deleting or editing task (S460-YES, S470-YES).

8. The method according to claim 1, wherein said displaying step is performed when a signal is received from the counterpart terminal or when requested by the mobile communication terminal (Figs.5A to 5C).

9. The method according to claim 2, wherein the at least one file processing task comprises at least one of downloading, adding, deleting and editing of a file.

10. A mobile communication terminal (200) comprising:
a controller (210);
a display (260); and
a Bluetooth module (270),
wherein the mobile communication terminal is operating in a slave mode and the controller analyzes information about a counterpart terminal (300) connected via the Bluetooth module, stores the analyzed information about the counterpart terminal, analyzes a file processing task performed by the counterpart terminal, stores the analyzed file processing task and displays the information about the counterpart terminal and the file processing task on the display.

11. The mobile communication terminal of claim 10, further comprising a memory (230) for storing at least one of the information about the counterpart terminal and the file processing task.

12. The mobile communication terminal of claim 11, wherein said controller (210) controls to store a time of connection and identifier information of the counterpart terminal in the memory, if the counterpart terminal is capable of performing at least one file processing task.

13. The mobile communication terminal of claim 12, wherein said file processing tasks are at least one of download, addition, deletion and editing of a file.

14. The mobile communication terminal of claim 12, wherein said counterpart terminal (300) capable of performing file processing tasks is at least one of a computer and a mobile phone.

15. The mobile communication terminal of claim 12, wherein said controller (210) controls to determine a file processing task type to be performed by the counterpart terminal from a signal received from the counterpart terminal, and store a time of receipt of the signal and the determined file processing task type.

16. The mobile communication terminal of claim 15, wherein said controller (210) comprises backing up a pertinent file, if the determined file processing task type is a file deleting or editing task.

## Patentansprüche

1. Verfahren für Logverwaltung während einer Bluetooth-Kommunikation, wobei das Verfahren für ein in einem Slave-Modus arbeitendes mobiles Kommunikationsendgerät die Schritte aufweist:
Analysieren von Information über ein korrespondierendes Endgerät, das über Bluetooth verbunden ist (S410);
Speichern der analysierten Information über das korrespondierende Endgerät (S420);
Analysieren einer Dateiverarbeitungsaufgabe, die durch das korrespondierende Endgerät ausgeführt wird (S440 bis S470);
Speichern der analysierten Dateiverarbeitungsaufgabe (S490); und
Anzeigen der gespeicherten Information über das korrespondierende Endgerät und der Dateiverarbeitungsaufgabe (Fig. 5A).

2. Verfahren nach Anspruch 1, wobei der Schritt des Speicherns von Information über das korrespondierende Endgerät aufweist:
Bestimmen, ob das korrespondierende Endgerät ein Endgerät ist, das in der Lage ist mindestens eine Dateiverarbeitungsaufgabe durchzuführen (S410); und
Speichern einer Verbindungszeit und Identifizierungsinformation, die von dem korrespondierenden Endgerät empfangen wird, falls das korrespondierende Endgerät in der Lage ist mindestens eine Dateiverarbeitungsaufgabe durchzuführen (S420).

3. Verfahren nach Anspruch 2, wobei die Identifizierungsinformation eindeutige Information aufweist, die das korrespondierende Endgerät identifiziert und an das mobile Kommunikationsendgerät während der Verbindung für die Bluetooth-Kommunikation übertragen wird.

4. Verfahren nach Anspruch 3, wobei die eindeutige Information mindestens einen Typ, einen Namen, eine Seriennummer und eine eindeutige ID-Nummer des korrespondierenden Endgeräts aufweist.

5. Verfahren nach Anspruch 2, wobei das korrespondierende Endgerät, das in der Lage ist Dateiverarbeitungsaufgaben durchzuführen, mindestens einen von einem Computer und einem Mobiltelefon aufweist.

6. Verfahren nach Anspruch 2, wobei der Schritt des Speichems der analysierten Dateiverarbeitungsaufgabe (S490) aufweist:
Bestimmen eines Dateiverarbeitungsaufgabentyps, der durch das korrespondierende Endgerät durchzuführen ist, von einem Signal, das von dem korrespondierenden Endgerät empfangen wird; und
Speichern einer Empfangszeit des Signals und des bestimmten Dateiverarbeitungsaufgabentyps.

7. Verfahren nach Anspruch 6, weiterhin aufweisend eine Sicherung einer zugehörigen Datei, falls der bestimmte Dateiverarbeitungsaufgabentyp eine Aufgabe zum Dateilöschen oder Dateibearbeiten ist (S460-JA, S470-JA).

8. Verfahren nach Anspruch 1, wobei der Anzeigeschritt durchgeführt wird, wenn ein Signal von dem korrespondierenden Endgerät empfangen wird, oder wenn durch das mobile Kommunikationsendgerät angefordert (Figs. 5A bis 5C).

9. Verfahren nach Anspruch 2, wobei die mindestens eine Dateiverarbeitungsaufgabe mindestens eine von einem Herunterladen, Hinzufügen, Löschen und Bearbeiten einer Datei aufweist.

10. Mobiles Kommunikationsendgerät (200), aufweisend:
eine Steuerung (210);
eine Anzeige (260); und
ein Bluetooth-Modul (270),
wobei das mobile Kommunikationsendgerät in einem Slave-Modus arbeitet und die Steuerung Information über ein über das Bluetooth-Modul verbundene korrespondierende Endgerät (300) analysiert, die analysierte Information über das korrespondierende Endgerät speichert, eine durch das korrespondierende Endgerät durchgeführte Dateiverarbeitungsaufgabe analysiert, die analysierte Dateiverarbeitungsaufgabe speichert und die Information über das korrespondierende Endgerät und die Dateiverarbeitungsaufgabe auf der Anzeige anzeigt.

11. Mobiles Kommunikationsendgerät nach Anspruch 10, weiterhin aufweisend einen Speicher (230) zum Speichern zumindest eines von der Information über das korrespondierende Endgerät und der Dateiverarbeitungsaufgabe.

12. Mobiles Kommunikationsendgerät nach Anspruch 11, wobei die Steuerung (210) steuert, um eine Verbindungszeit und Identifizierungsinformation des korrespondierenden Endgeräts in dem Speicher zu speichern, falls das korrespondierende Endgerät in der Lage ist mindestens eine Dateiverarbeitungsaufgabe durchzuführen.

13. Mobiles Kommunikationsendgerät nach Anspruch 12, wobei die Dateiverarbeitungsaufgaben mindestens eine von einem Herunterladen, Hinzufügen, Löschen und Bearbeiten einer Datei sind.

14. Mobiles Kommunikationsendgerät nach Anspruch 12, wobei das korrespondierende Endgerät (300), das in der Lage ist Dateiverarbeitungsaufgaben durchzuführen, mindestens eines von einem Computer und einem Mobiltelefon ist.

15. Mobiles Kommunikationsendgerät nach Anspruch 12, wobei die Steuerung (210) steuert, um einen der durch das korrespondierende Endgerät durchgeführten Dateiverarbeitungsaufgabentyp von einem von dem korrespondierenden Endgerät empfangenen Signal zu bestimmen, und eine Empfangszeit des Signals und des bestimmten Dateiverarbeitungsaufgabentyps zu speichern.

16. Mobiles Kommunikationsendgerät nach Anspruch 15, wobei die Steuerung (210) ein Sichern einer zugehörigen Datei aufweist, falls der bestimmte Dateiverarbeitungsaufgabentyp eine Aufgabe zum Dateilöschen oder Dateibearbeiten ist.

## Revendications

1. Procédé de gestion de journal pendant une communication en Bluetooth, le procédé destiné à un terminal de communication mobile fonctionnant dans un mode esclave comprenant les étapes qui consistent à :
analyser une information concernant un terminal de contrepartie connecté par Bluetooth (S410) ;
stocker l'information analysée concernant le terminal de contrepartie (S420) ;
analyser une tâche de traitement de fichiers exécutée par le terminal de contrepartie (S440 à S470) ;
stocker la tâche de traitement de fichiers (S490) analysée ; et
afficher l'information stockée concernant le terminal de contrepartie et la tâche de traitement de fichiers (Fig. 5A).

2. Procédé selon la revendication 1, dans lequel ladite étape qui consiste à stocker une information concernant le terminal de contrepartie comprend le fait :
de déterminer si le terminal de contrepartie est un terminal capable d'exécuter au moins une tâche de traitement de fichiers (S410) ; et
de stocker un horaire de connexion et une information d'identification que l'on reçoit du terminal de contrepartie, si le terminal de contrepartie est capable d'exécuter au moins une tâche de traitement de fichiers (S420).

3. Procédé selon la revendication 2, dans lequel ladite information d'identification comprend une information unique identifiant le terminal de contrepartie et transférée au terminal de communication mobile pendant la connexion pour la communication en Bluetooth.

4. Procédé selon la revendication 3, dans lequel ladite information unique comprend au moins l'un parmi un type, un nom, un numéro de série et un numéro ID unique du terminal de contrepartie.

5. Procédé selon la revendication 2, dans lequel ledit terminal de contrepartie capable d'exécuter des tâches de traitement de fichiers comprend au moins l'un parmi un ordinateur et un téléphone mobile.

6. Procédé selon la revendication 2, dans lequel ladite étape qui consiste à stocker la tâche de traitement de fichiers (S490) analysée comprend le fait :
de déterminer un type de tâche de traitement de fichiers devant être exécuté par le terminal de contrepartie à partir d'un signal reçu du terminal de contrepartie ; et
stocker un horaire de réception du signal et le type de tâche de traitement de fichiers déterminé.

7. Procédé selon la revendication 6, comprenant en outre la sauvegarde d'un fichier pertinent, si le type de tâche de traitement de fichiers déterminé est une tâche d'effacement ou d'édition de fichiers (S460-OUI, S470-OUI).

8. Procédé selon la revendication 1, dans lequel ladite étape d'affichage est exécutée lorsqu'un signal est reçu du terminal de contrepartie ou à la demande du terminal de communication mobile (Fig. 5A à 5C).

9. Procédé selon la revendication 2, dans lequel l'au moins une tâche de traitement de fichiers comprend au moins l'un parmi le téléchargement, l'ajout, l'effacement et l'édition d'un fichier.

10. Terminal de communication mobile (200) comprenant:
une unité de commande (210) ;
un écran (260) ; et
un module Bluetooth (270) ;
où le terminal de communication mobile fonctionne dans un mode esclave et l'unité de commande analyse une information concernant un terminal de contrepartie (300) connecté à travers le module Bluetooth, stocke l'information analysée concernant le terminal de contrepartie, analyse une tâche de traitement de fichiers exécutée par le terminal de contrepartie, stocke la tâche de traitement de fichiers analysée et affiche l'information concernant le terminal de contrepartie et la tâche de traitement de fichiers sur l'écran.

11. Terminal de communication mobile de la revendication 10, comprenant en outre une mémoire (230) destinée au stockage d'au moins l'une de l'information concernant le terminal de contrepartie et de la tâche de traitement de fichiers.

12. Terminal de communication mobile de la revendication 11, dans lequel ladite unité de commande (210) fonctionne pour stocker un horaire de connexion et une information d'identification du terminal de contrepartie dans la mémoire, si le terminal de contrepartie est capable d'exécuter au moins une tâche de traitement de fichiers.

13. Terminal de communication mobile de la revendication 12, dans lequel lesdites tâches de traitement de fichiers sont au moins l'un parmi le téléchargement, l'ajout, l'effacement et l'édition d'un fichier.

14. Terminal de communication mobile de la revendication 12, dans lequel ledit terminal de contrepartie (300) capable d'exécuter des tâches de traitement de fichiers est au moins l'un parmi un ordinateur et un téléphone mobile.

15. Terminal de communication mobile de la revendication 12, dans lequel ladite unité de commande (210) fonctionne pour déterminer un type de tâche de traitement de fichiers devant être exécuté par le terminal de contrepartie à partir d'un signal reçu du terminal de contrepartie, et stocke un horaire de réception du signal et le type de tâche de traitement de fichiers déterminé.

16. Terminal de communication mobile de la revendication 15, dans lequel ladite unité de commande (210) comprend la sauvegarde d'un fichier pertinent, si le type de tâche de traitement de fichiers déterminé est une tâche d'effacement ou d'édition de fichiers.
